# EUROPÄISCHE PATENTANMELDUNG

(11) **EP 1 170 965 A2**
(43) Veröffentlichungstag der Anmeldung: **09.01.2002**
(21) Anmeldenummer: 01440176.4
(22) Anmeldetag: 19.06.2001
(51) Int. Cl.: H04Q 7/20

(54) **Zellulares Funksystem**

(30) Priorität: 07.07.2000 DE 10032602
(71) Anmelder: ALCATEL, 75008 Paris (FR)
(72) Erfinder: Jaenecker, Peter, Dr., 75334 Straubenhardt (DE); Halbauer, Hardy, 76275 Ettlingen (DE); Schwoerer, Gabriele, 71263 Weil der Stadt (DE); Otterbach, Jürgen, 70499 Stuttgart (DE); Jacob, Gunther, 71277 Rutesheim (DE); Oberle, Karsten, 68199 Mannheim (DE)
(74) Vertreter: Menzietti, Domenico, Dipl.-Ing

(57) **Zusammenfassung**

Aufgabe der Erfindung ist es, ein zellulares Funksystem, insbesondere ein LMDS-System, zu schaffen, bei der die Ausnutzung der Übertragungskapazität optimiert ist. Das zellulares Funksystem ist insbesondere dadurch gekennzeichnet, dass jede Zelle eine Basisstation beinhaltet, dass mindestens eine Zelle in mindestens zwei Sektoren aufgeteilt ist, dass jeder Sektor einen nicht-überlappenden Bereich und zwei überlappende Bereiche aufweist, und dass jede Basisstation geeignet ist, mindestens eine Übertragungseinheit (Zeitschlitz oder orthogonaler Kode) gleichzeitig mindestens zwei unterschiedlichen, sich in unterschiedlichen nicht-überlappenden Bereichen einer Zelle befindlichen Endstellen zuzuweisen.

## Beschreibung

Die Erfindung betrifft ein zellulares Funksystem und eine Basisstation für ein solches zellulares Funksystem.

Zellulare Funksysteme als solche sind bekannt. Als zellulares Funksystem gilt z.B. ein sog. LMDS-System; LMDS=Local Multipoint Distribution Services. Ein LMDS-System ist ein drahtloses Breitbandsystem und dient der bidirektionalen Übertragung von z.B. Sprache, Daten und Internetdiensten. Die Datenrate beträgt beispielsweise 8 Mbit/s in beide Richtungen. Die Übertragung erfolgt z.B. im Frequenzbereich von 20 bis 40 GHz. Jede Zelle wird von einer Basisstation gesteuert. In einer Zelle können mehrere Endstellen gleichzeitig mit der Basisstation kommunizieren. Endstellen sind fest installiert, d.h. ihre Position ist fix. LMDS-Systeme arbeiten üblicherweise mit TDM in der Richtung von den Basisstationen zu den Endstellen und mit TDMA in der Richtung von den Endstellen zu den Basisstationen; TDM=Time Division Multiplex, TDMA=Time Division Multiple Access.

In LMDS-Systemen ist jede Zelle üblicherweise in vier Sektoren aufgeteilt. Jeder Sektor deckt dabei derart einen Winkel von 90 Grad ab, dass insgesamt 360 Grad abgedeckt sind.

Um innerzellulare Interferenzen zu vermeiden wird durch die Verwendung von vier Frequenzkanälen jedem Sektor ein anderer Frequenzkanal zugewiesen. Innerhalb eines Sektors werden als Übertragungseinheiten Zeitschlitze verwendet. Die sich in einem Sektor befindlichen Endstellen erhalten auf Anfrage Zeitschlitze aus dem für den entsprechenden Sektor zugewiesenen Frequenzkanal zugewiesen.

Bei der Verwendung von CDMA in der Richtung von den Endstellen zu den Basisstationen würde ebenfalls eine Aufteilung der Frequenzkanäle auf die Sektoren nahe liegen; CDMA=Code Division Multiple Access. Den Endstellen würden die orthogonalen Kodes in dem entsprechenden Frequenzkanal zugewiesen.

Aufgabe der Erfindung ist es, ein zellulares Funksystem zu schaffen, bei dem die Ausnutzung der Übertragungskapazität optimiert ist.

Gelöst wird die Aufgabe durch ein zellulares Funksystem nach Patentanspruch 1.

Das zellulares Funksystem ist insbesondere dadurch gekennzeichnet, dass jede Zelle eine Basisstation beinhaltet, dass mindestens eine Zelle in mindestens zwei Sektoren aufgeteilt ist, dass jedem Sektor der gleiche Frequenzkanal zugewiesen ist, dass jeder Sektor einen nicht-überlappenden Bereich und zwei überlappende Bereiche aufweist, und dass jede Basisstation geeignet ist, mindestens eine Übertragungseinheit gleichzeitig mindestens zwei unterschiedlichen, sich in unterschiedlichen nicht-überlappenden Bereichen einer Zelle befindlichen Endstellen zuzuweisen. Die Größe der Sektoren, ihre Form sowie ihre Anzahl ist prinzipiell beliebig. Sie können insbesondere an die reale Zellengrößen und -formen und die Kundenprofile angepasst werden. Ein entscheidender Vorteil ist, dass die interne Zellenaufteilung unabhängig ist von der Zellenaufteilung der Nachbarzellen. Eine nachträgliche Änderung einer Zellenaufteilung kann somit ohne Beeinflussung der Nachbarzellen erfolgen. Werden innerhalb einer Zelle z.B. mehr Teilnehmeranschlüsse benötigt so wird einfach die Anzahl der Sektoren erhöht. Wird z.B. in einem Sektor ein mittelständischer Unternehmen als neuer Kunde gewonnen, so steigt der Bedarf in diesem Sektor erheblich an. Der entsprechende Sektor kann durch zusätzliche Installation einer Antenne an der Basisstation in zwei Sektoren aufgeteilt werden. Umgekehrt können bei sinkendem Bedarf zwei Sektoren zu einem zusammengeschaltet werden, z.B. durch Zusammenschalten von zwei Antennen der Basisstation. Diese Variabilität wird ermöglicht durch die Tatsache, dass innerhalb einer Zelle in allen Sektoren der gleiche Frequenzkanal verwendet wird. Gerade in dicht besiedelten Gebieten kann dies von erheblicher Bedeutung sein. Eine einmal festgelegte Topologie bindet somit nicht, sondern kann an die tatsächlichen Bedarf dynamisch und lokal angepasst werden. Ebenso ist die maximale Anzahl von Endstellen innerhalb einer Zelle nun nicht mehr so begrenzt, da mehr Übertragungseinheiten auf Grund der größeren Anzahl von Sektoren zugewiesen werden können. Durch die Einführung von überlappenden und nicht-überlappenden Bereichen kann eine gezielte Zuweisung von Übertragungseinheiten erfolgen. Endstellen in einem nicht-überlappenden Bereich eines Sektors können per Definition Endstellen in nicht-überlappenden Bereichen anderer Sektoren nicht stören. Aus diesem Grund ist max. eine K-fache (in der Richtung von den Endstellen zur Basisstation) bzw. K/2-fache (in der Richtung von der Basisstation zu den Endstellen) Zuweisung einer Übertragungseinheit innerhalb einer Zelle möglich; K entspricht der Anzahl der Sektoren einer Zelle und ist eine natürliche Zahl größer Eins. Als Übertragungseinheit ist z.B. ein Zeitschlitz oder ein orthogonaler Kode vorgesehen. Ein Zeitschlitz kann nun innerhalb einer Zelle mehrfach belegt werden. Für den Fall, dass innerhalb einer Zelle vier Sektoren vorgesehen sind, können vier Endstellen, die sich untereinander aufgeteilt in den nicht-überlappenden Bereichen der vier Sektoren befinden, gleichzeitig ein und denselben Zeitschlitz für die Übertragung von Informationen wie Sprache, Daten oder Internetdienste nutzen. Die Endstellen sind bei der Verwendung von LMDS als zellulares Funksystem stationär angeordnet, d.h. ihre Position innerhalb einer Zelle ist vorbekannt und in der Basisstation abgespeichert. Es ist insbesondere bekannt, ob sich eine Endstelle innerhalb oder außerhalb eines nicht-überlappenden Bereichs befindet. Bei der Anmeldung einer Endstelle bei der Basisstation ermittelt diese aus der Adresse der Endstelle die Position der Endstelle. Es wird der Sektor ermittelt und die Zugehörigkeit zu einem nicht-überlappenden oder einem überlappenden Bereich. Befindet sich die Endstelle in einem nicht-überlappenden Bereich, so können ihr durch die Basisstation ein, zwei oder mehr Zeitschlitze oder orthogonale Kodes aus den aktuell unbelegten Zeitschlitzen bzw. Kodes zugewiesen werden. Dabei stehen für eine Zuweisung grundsätzlich für jeden Sektor einer Zelle N Zeitschlitze bzw. Kodes zur Verfügung; N ist eine natürliche Zahl größer Eins. Lediglich die Zeitschlitze bzw. Kodes, die durch Endstellen innerhalb des gleichen Sektors und Endstellen innerhalb der an den gleichen Sektor angrenzenden überlappenden Bereiche der Nachbarsektoren belegt sind können nicht zugewiesen werden. Zeitschlitze bzw. Kodes, die durch Endstellen außerhalb des gleichen Sektors und außerhalb der an den gleichen Sektor angrenzenden überlappenden Bereiche der Nachbarsektoren belegt sind können aber zugewiesen werden.

Zur Zuweisung von Übertragungseinheiten zu Endstellen in überlappenden Bereichen: Überlappende Bereiche sind dadurch gekennzeichnet, dass die Funksignale der sich in ihnen befindlichen Endstellen in einen benachbarten Sektor strahlen können und auf diese Weise von zwei Empfangsantennen der Basisstation empfangen werden können. Ferner können Funksignale einer Basisstation-Sendeantenne eines Sektors von Endstellen in einem Teilbereich eines Nachbarsektors empfangen werden. Würde nun einer Endstelle in einem überlappenden Bereich und einer Endstelle in einem entsprechend überlappenden Bereich des benachbarten Sektors in der Richtung von den Endstellen zur Basisstation der gleiche Zeitschlitz bzw. der gleiche Kode zugewiesen, so würden die Empfangsantennen beider Sektoren Funksignale beider Endstellen empfangen und wären damit gestört. Beide Endstellen würden sich somit bei gleichzeitigem Senden gegenseitig stören. Würde nun einer Endstelle in einem überlappenden Bereich und einer Endstelle in einem entsprechend überlappenden Bereich des benachbarten Sektors in der Richtung von der Basisstation zu den Endstellen der gleiche Zeitschlitz bzw. der gleiche Kode zugewiesen, so würden beide Endstellen Funksignale von den Sendeantennen beider Sektoren empfangen und beide Endstellen wären somit ebenfalls gestört. Um solche Störungen und weitere Störungen, die z.B. dann auftreten, wenn sich eine Endstelle in einem überlappenden Bereich und eine weitere Endstelle sich in einem nicht-überlappenden Bereich eines Nachbarsektors befindet, zu vermeiden, wird in der Basisstation vor einer Zuweisung geprüft, ob ein zuzuweisender Zeitschlitz bzw. ein Kode bereits in dem benachbarten Sektor belegt ist. Ist dies nicht der Fall, so wird der entsprechende Zeitschlitz bzw. Kode zugewiesen. Ist dies jedoch der Fall, so wird ein anderer Zeitschlitz bzw. Kode gesucht. Ist der neu aufgefundene Zeitschlitz bzw. Kode weder im Sektor der Endstelle noch im benachbarten Sektor belegt, so wird er der Endstelle zugewiesen. Kann kein Kode aufgefunden werden, da alle Zeitschlitze bzw. Kodes entweder im Sektor der Endstelle oder im benachbarten Sektor belegt sind, so wird eine Umverteilung dahingehend versucht, dass für Endstellen in nicht-überlappenden Bereichen unterschiedlicher Sektoren vorzugsweise die gleichen Zeitschlitze bzw. Kodes belegt werden. Die nach der Umverteilung übrig gebliebenen, nicht belegten Zeitschlitze bzw. Kodes können dann der Endstelle im überlappenden Bereich zugewiesen werden. Es sei darauf hingewiesen, dass Endstellen in überlappenden Bereichen nicht benachbarter Sektoren die gleichen Zeitschlitze bzw. Kodes zugewiesen werden können, und zwar ohne Störungen, da Funksignale von Endstellen eines Sektors maximal auf den benachbarten Sektor ausstrahlen.

Innerhalb einer Zelle wird in allen Sektoren der gleiche Frequenzkanal verwendet. Der Frequenzkanal ist z.B. ein Kanal einer bestimmten Bandbreite im Frequenzbereich von 20 bis 40 GHz. Auf Grund des gleichen Frequenzkanals kann die Anzahl der Sektoren innerhalb einer Zelle beliebig geändert werden, ohne Nachbarzellen zu beeinflussen. Eine Anpassung an den aktuellen Bedarf ist somit auch nach Installation und Inbetriebnahme des zellulares Funknetzes nachträglich jederzeit auf einfach Art und Weise möglich. Um das zellulare Funknetz insgesamt störunempfindlicher zu machen, können in einer bevorzugten Ausführungsform der Erfindung in benachbarten Zellen unterschiedliche Frequenzkanäle verwendet werden. Beispielsweise werden vier Frequenzkanäle verwendet, die so über die Zellen verteilt werden, dass die bei einer orthogonalen Struktur acht Nachbarzellen und bei einer Wabenstruktur sechs Nachbarzellen einer beliebigen Zelle jeweils mit einem gegenüber der beliebigen Zelle unterschiedlichen Frequenzkanal arbeiten. Dadurch wird eine Entzerrung im gesamten zellularen Funknetz erreicht.

In einer weiteren bevorzugten Ausführungsform der Erfindung sind innerhalb einer Zelle alle aktiven Endstellen synchronisiert. Nach der Anmeldung einer Endstelle bei der Basisstation und vor der Übermittlung von Daten synchronisiert sich die Endstelle auf den Takt der Basisstation. Alle aktiven Endstellen synchronisieren sich somit auf den gleichen Takt. Die Zuweisung von Übertragungseinheiten zu Endstellen wird auf diese Art und Weise vereinfacht. Zusätzlich werden mögliche Interferenzen minimiert.

Vorteilhafte Ausgestaltungen der Erfindung sind den abhängigen Patentansprüchen und der nachfolgenden Beschreibung zu entnehmen.

Im folgenden wird ein Ausführungsbeispiel unter Zuhilfenahme von zwei Figuren erläutert. Es zeigen:
- Fig. 1: eine schematische Darstellung einer Aufteilung einer Zelle in Sektoren und
- Fig. 2: eine schematische Darstellung einer Topologie eines zellulares Funknetzes.

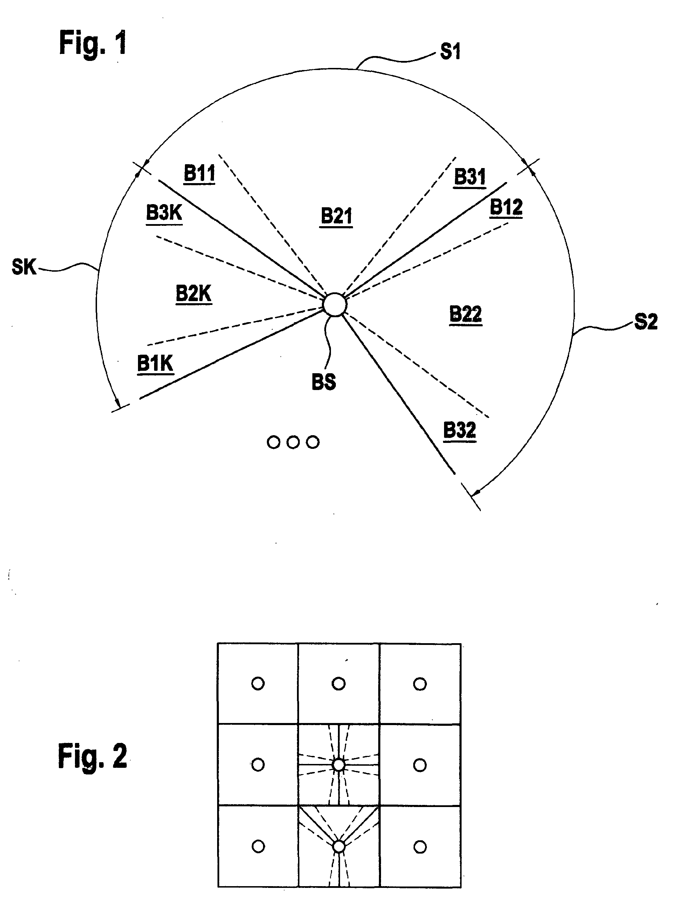

Das Ausführungsbeispiel wird nun zunächst unter Zuhilfenahme von Fig. 1 erläutert. Fig. 1 zeigt eine Aufteilung einer Zelle eines zellulares Funknetzes in Sektoren. Das zellulare Funknetz ist beispielsweise als LMDS-System ausgeführt. Das Funknetz ist aus mehreren aneinander angrenzenden Zellen aufgebaut. Jede Zelle hat eine Basisstation, die die Funkkommunikation innerhalb der Zelle steuert. Die Basisstation ist zumeist mittig in der Zelle angeordnet. Jede Zelle ist in eine Anzahl von Sektoren aufgeteilt, wobei die Anzahl von Zelle zu Zelle variieren kann. Die Zellengröße kann ebenfalls von Zelle zu Zelle variieren, z.B. abhängig von der Topologie des Netzes. In Fig. 1 ist schematisch eine Zelle mit K Sektoren S1, S2 bis SK und einer Basisstation BS dargestellt; wobei K eine natürliche Zahl größer Eins ist. Jeder Sektor S1, S2 bis SK hat drei Bereiche, einen nicht-überlappenden und zwei überlappende. Sektor S1 hat den nicht-überlappenden Bereich B21 und die überlappenden Bereiche B11 und B31. Sektor S2 hat den nicht-überlappenden Bereich B22 und die überlappenden Bereiche B12 und B32. Sektor SK hat den nicht-überlappenden Bereich B2K und die überlappenden Bereiche B1K und B3K. Die Sendeantennen, die in der Basisstation BS zur Bildung der Sektoren S1, S2 bis SK verwendet werden, weisen in den Randbereichen Streubereiche auf, die in den benachbarten Sektor hineinragen. Dadurch entstehen die überlappenden Bereiche. Endstellen, die sich in den überlappenden Bereichen befinden können zum einen Funksignale von zwei unterschiedlichen Sendeantennen der Basisstation empfangen. Zum anderen empfangen die den Sendeantennen zugeordneten Empfangsantennen der Basisstation beide Funksignale, die von einer Endstelle in dem überlappenden Bereich ausgesandt werden. Endstellen, die sich hingegen in einem nicht-überlappenden Bereich befinden, können zum einen nur Funksignale von einer Sendeantenne der Basisstation empfangen. Zum anderen empfängt nur eine Empfangsantenne der Basisstation Funksignale, die von der Endstelle in dem nicht-überlappenden Bereich ausgesandt werden. Endstellen, die sich in einem nicht-überlappenden Bereich befinden, können somit Endstellen, die sich in nicht-überlappenden Bereichen anderer Sektoren befinden, nicht stören. Eine Endstelle, die sich hingegen in einem überlappenden Bereich befindet, kann, sofern ihr der gleiche Zeitschlitz bzw. Kode zugewiesen würde wie einer Endstelle, die sich in dem sich dem überlappenden Bereich anschließenden benachbarten Sektor befindet, diese stören.

Jeder Sektor S1, S2 bis SK spannt einen gewissen Winkelbereich auf. Jeder Sektor S1, S2 bis SK kann dabei einen anderen Winkelbereich aufspannen. Werden z.B. zwei Sektoren für eine Zelle verwendet, so spannt z.B. jeder Sektor einen Winkelbereich von 180 Grad auf. Werden z.B. vier Sektoren für eine Zelle verwendet so spannt z.B. jeder Sektor einen Winkelbereich von 90 Grad auf. Werden z.B. sechs Sektoren für eine Zelle verwendet, so spannen z.B. vier Sektoren jeweils einen Winkelbereich von jeweils 80 Grad auf und zwei Sektoren jeweils einen Winkelbereich von 20 Grad. Letztere Sektoren sind z.B. auf Bereiche gerichtet, in denen einen höhere Endstellenkapazität und/oder eine höhere Kommunikationsrate vorhanden ist. Innerhalb eines Sektors umfasst der nicht-überlappende Bereich ca. 96 bis 98 % der Sektorfläche und die beiden überlappenden Bereiche ca. 2 bis 4 %.

Die Basisstation BS beinhaltet die üblichen Bauelemente, wie einen Prozessor, einen Speicher, eine Anzahl von Antennen, Kodierer und Dekodierer, Detektoren, etc. sowie z.B. eine optische Verbindung über optische Glasfaserkabel zu einer Vermittlungsstelle, eine Funkverbindung zu einer anderen Basisstation oder eine Richtfunkverbindung zu einer Zentrale.

Bei der Verwendung von TDMA wird in jeder Zelle eine Anzahl von Zeitschlitzen für die Übertragung von Informationen von den Endstellen zur Basisstation verwendet. Bei der Verwendung von CDMA wird in jeder Zelle eine Anzahl von orthogonalen Kodes für die Übertragung von Informationen von den Endstellen zur Basisstation verwendet.

Dies wird im folgenden für den Fall der Verwendung von CDMA näher erläutert (Für die Übertragung von Informationen von der Basisstation zu den Endstellen gilt unter Berücksichtigung der Punkt-zu-Mehrpunkt Konfiguration vergleichbares, so dass auf eine nähere Erläuterung nicht eingegangen wird.): In der Basisstation BS steht an der Luftschnittstelle z.B. eine maximale Anzahl von N orthogonalen Kodes zur Verfügung; wobei N eine natürliche Zahl ist, z.B. 1000. Diese Kodes können nun wie folgt auf Endstellen in den einzelnen Sektoren aufgeteilt werden: Befinden sich diejenigen Endstellen, die kommunizieren wollen, alle in den nicht-überlappenden Bereichen, so können auf Grund der Tatsache, dass sich die Endstellen gegenseitig nicht beeinflussen können alle N Kodes mehrfach zugewiesen werden. Die N Kodes werden z.B. einer Endstelle in Sektor S1 zugewiesen. Gleichzeitig werden m der N Kodes einer ersten Endstelle in Sektor S2 und N-m Kodes der N Kodes einer zweiten Endstelle in Sektor S2 zugewiesen. Gleichzeitig werden z.B. die N Kodes auf n Endstellen in Sektor K aufgeteilt und diesen zugewiesen. Die Basisstation übernimmt dann die Weiterleitung der Informationen aller aktiven Endstellen aller Sektoren über z.B. einer optischen Glasfaserleitung zu einer Vermittlungsstelle, wobei auf der Glasfaserleitung z.B. Multiplextechniken angewandt werden können. Die Feststellung, ob sich die Endstellen in den nicht-überlappenden Bereichen befinden ist in LMDS-Systemen einfach, da sich die Endstellen an festen Positionen befinden, die vorbekannt sind. Die Wahrscheinlichkeit, dass sich alle Endstellen in nicht-überlappenden Bereichen befinden ist groß, da diese Bereiche die weitaus größte Fläche der Zelle abdecken. Für den Fall, dass eine Endstelle, die sich in einem überlappenden Bereich befindet, aktiv werden möchte, also z.B. über die Basisstation BS mit einer anderen Endstellen kommunizieren möchte, wird in der Basisstation ein vorprogrammierter Algorithmus gestartet. Befindet sich die Endstelle z.B. im Bereich B31, so ist vor einer Zuweisung eines Kodes zu prüfen, ob
1. der Kode nicht bereits einer Endstelle im nicht-überlappenden Bereich B21 zugewiesen wurde und daher belegt ist. Endstelle in den Bereichen B21 und B31 liegen im gleichen Sektor und können sich daher gegenseitig stören.
2. der Kode nicht bereits einer Endstelle im nicht-überlappenden Bereich B22 zugewiesen wurde und daher belegt ist. Eine Endstelle im Bereichen B31 liegt im Randbereich und kann daher Endstellen in den Sektoren S1 und S2 stören.
3. der Kode nicht bereits einer Endstelle in den überlappenden Bereichen B11, B31, B12, B32 zugewiesen wurde und daher belegt ist.
4. falls auf Grund der durch 1. bis 3. vorgegebenen Belegungen kein freier Kode gefunden werden kann, eine Umverteilung der Kodes in den Sektoren S1 und S2 derart erfolgen kann, dass die Anzahl der gleichen Kodes in den Bereichen B21 und B22 maximiert wird, da diese sich gegenseitig nicht beeinflussen. Von den 1000 Kodes werden beispielweise bevorzugt die ersten 900 Kodes für die nicht-überlappenden Bereiche reserviert und die letzten 100 Kodes für die überlappenden Bereiche.

Ein aufgefundener freier Kode X wird dann der Endstelle im Bereich B31 zugewiesen. Der Kode X ist dann belegt für alle Endstellen in den Sektoren S1 und S2. Für Endstellen außerhalb der Sektoren S1 und S2 ist dieser Kode jedoch frei verfügbar und kann gleichzeitig einer anderen Endstelle zugewiesen werden.

Einer Endstelle in einem nicht-überlappenden Bereich können somit die maximale Anzahl N Kodes zugewiesen werden. Gleichzeitig stehen die N Kodes den anderen Sektoren zur Verfügung. Einer Endstelle in einem überlappenden Bereich können ebenfalls die maximale Anzahl von N Kodes zugewiesen werden. Gleichzeitig stehen die N Kodes den anderen Sektoren mit Ausnahme des benachbarten Sektors zur Verfügung.

Beispiel: Einer Endstelle im Bereich B31 werden N/2 Kodes aus einer Anzahl von N Kodes zugewiesen. Einer Endstelle im Bereich B12 werden die restlichen N/2 Kodes zugewiesen. In den Sektoren S1 und S2 können dann keine weiteren Kodes mehr vergeben werden. Wohl stehen aber allen anderen Sektoren in der Richtung von den Endstellen zur Basisstation alle N Kodes frei zur Verfügung. In der Richtung von der Basisstation zu den Endstellen können z.B. die im Sektor S1 vergebenen Kodes im Sektor S3 wieder neu vergeben werden; im Sektor S4 stehen die N/2 Kodes aus Sektor S2 frei zur Verfügung.

Anstelle eines LMDS-Systems als Funksystem kann auch UMTS verwendet werden; UMTS=Universal Mobile Telecommunication System oder jedes andere zellulare Funksystem. Die Feststellung, ob sich ein Mobilfunkgerät im überlappenden Bereich befindet kann durch die Handover-Funktion ermittelt werden. Die Erfindung ist nicht auf CDMA begrenzt. Sie kann auf analoge Art und Weise auch bei TDMA, FDMA oder vergleichbaren Verfahren angewendet werden.

Das Ausführungsbeispiel wird nun weiter unter Zuhilfenahme von Fig. 2 erläutert. Fig. 2 zeigt die Darstellung einer Topologie eines zellularen Funknetzes. Der dargestellte Ausschnitt zeigt neun Zellen. Eine Zelle ist in vier Sektoren aufgeteilt, eine andere in drei Sektoren. Jeder Sektor hat einen nicht-überlappenden und zwei überlappende Bereiche. Die Anzahl der Sektoren pro Zelle ist abhängig von der Ausdehnung der Zelle, dem Gelände, der Anzahl der Endstellen, den Kundenanforderungen, etc. Bei einem LMDS-System als zellulares Funknetz, bei dem zudem die Position der stationären Kunden vor Beginn der Installierung bekannt ist, kann bei der Topologieplanung eine Auswahl der Sektoren derart vorgenommen werden, dass die Anzahl der Endstellen in den überlappenden Bereichen minimiert wird, im Idealfall gleich Null ist. Im einfachsten Fall können die Anzahl der Sektoren für jede Zelle auch für einen Abschnitt des Funknetzes oder für das gesamte Funknetz gleich sein.

In den meisten Fällen wird jede Zelle des zellularen Funknetzes in mindestens zwei Sektoren aufgeteilt, wobei jeder Sektor einen nicht-überlappenden Bereich und zwei überlappende Bereiche aufweist. Dies wird vor allem in Netzen der Fall sein, die eine hohe Teilnehmerdichte aufweisen, also in der Regel in innerstädtischen Bereichen. In Ausnahmefällen können Sektoren auch lediglich einen nicht-überlappenden Bereich aufweisen oder einen nicht-überlappenden Bereich und lediglich einen überlappenden Bereich. Dies ist beispielsweise dann der Fall, wenn in einem bestimmten Winkelbereich innerhalb einer Zelle keine Endstellen vorhanden sind und der Sende- und Empfangsbereich daher nicht zwingend in diesen Winkelbereich hineinragen muss. In Bereichen mit einer niedrigen Teilnehmerdichte kann dies verstärkt vorkommen.

## Patentansprüche

1. Zellulares Funksystem, **dadurch gekennzeichnet, dass** jede Zelle eine Basisstation beinhaltet, dass mindestens eine Zelle in mindestens zwei Sektoren aufgeteilt ist, dass jedem Sektor der gleiche Frequenzkanal zugewiesen ist, dass jeder Sektor einen nicht-überlappenden Bereich und zwei überlappende Bereiche aufweist, und dass jede Basisstation geeignet ist, mindestens eine Übertragungseinheit gleichzeitig mindestens zwei unterschiedlichen, sich in unterschiedlichen nicht-überlappenden Bereichen einer Zelle befindlichen Endstellen zuzuweisen.

2. Zellulares Funksystem nach Anspruch 1, **dadurch gekennzeichnet, dass** jede Basisstation einer in mindestens zwei Sektoren aufgeteilten Zelle eine Steuereinheit beinhaltet, die derart programmiert ist, dass eine gesteuerte Zuweisung von Übertragungseinheiten an Endstellen in überlappenden Bereichen derart erfolgt, dass die zugewiesenen Übertragungseinheiten nicht gleichzeitig in einem angrenzenden nicht-überlappenden Bereich zugewiesen sind.

3. Zellulares Funksystem nach Anspruch 1, **dadurch gekennzeichnet, dass** als Übertragungseinheiten Zeitschlitze oder orthogonale Kodes verwendet werden.

4. Zellulares Funksystem nach Anspruch 1, **dadurch gekennzeichnet, dass** die Sektoren einer Zelle mindestens zwei unterschiedliche Größen aufweisen und mindestens zwei Sektoren sich über mindestens zwei unterschiedliche Winkel erstrecken.

5. Zellulares Funksystem nach Anspruch 1, **dadurch gekennzeichnet, dass** das zellulare Funksystem als LMDS-System ausgebildet ist, und dass jede Zelle in vier Sektoren aufgeteilt ist, wobei jeder Sektor sich über einen Winkel im Bereich von 80 bis 100 Grad erstreckt.

6. Zellulares Funksystem nach Anspruch 1, **dadurch gekennzeichnet, dass** das zellulare Funksystem derart ausgebildet ist, dass innerhalb einer Zelle in allen Sektoren der gleiche Frequenzkanal verwendet wird.

7. Zellulares Funksystem nach Anspruch 1, **dadurch gekennzeichnet, dass** das zellulare Funksystem derart ausgebildet ist, dass in benachbarten Zellen unterschiedliche Frequenzkanäle verwendet werden.

8. Zellulares Funksystem nach Anspruch 1, **dadurch gekennzeichnet, dass** das zellulare Funksystem derart ausgebildet ist, dass innerhalb einer Zelle alle Endstellen synchronisiert sind.

9. Basisstation für ein zellulares Funksystem, **dadurch gekennzeichnet, dass** die Basisstation eine in mindestens zwei Sektoren aufgeteilte Zelle bedient, wobei jedem Sektor der gleiche Frequenzkanal zugewiesen ist und jeder Sektor einen nicht-überlappenden Bereich und zwei überlappende Bereiche aufweist, und dass die Basisstation geeignet ist, mindestens eine Übertragungseinheit gleichzeitig mindestens zwei unterschiedlichen, sich in unterschiedlichen nicht-überlappenden Bereichen einer Zelle befindlichen Endstellen zuzuweisen.

10. Basisstation nach Anspruch 9, **dadurch gekennzeichnet, dass** die Zuweisung mindestens eine Übertragungseinheit zum Senden von Informationen von einer Endstelle zur Basisstation und mindestens eine Übertragungseinheit zum Senden von Informationen von der Basisstation zu einer Endstelle umfasst.
